# EUROPÄISCHE PATENTSCHRIFT

(11) **EP 2 109 753 B1**
(45) Veröffentlichungstag und Bekanntmachung des Hinweises auf die Patenterteilung: **02.06.2010**
(21) Anmeldenummer: 08701258.9
(22) Anmeldetag: 07.01.2008
(51) Int. Cl.: G01B 11/00, G02B 21/24, G02B 7/36

(54) **VERFAHREN ZUR OBJEKTIVIERTEN FOKUSSIERUNG FÜR DIE OPTISCHE LÄNGENMESSTECHNIK**
OBJECTIVE FOCUSING METHOD FOR OPTICAL LENGTH MEASUREMENT SYSTEMS
PROCÉDÉ DE FOCALISATION OBJECTIVÉE POUR LA TECHNIQUE DE LONGIMÉTRIE OPTIQUE

(30) Priorität: 15.01.2007 DE 102007003059
(43) Veröffentlichungstag der Anmeldung: 21.10.2009
(73) Patentinhaber: Technische Universität Ilmenau, 98693 Ilmenau (DE)
(72) Erfinder: TÖPFER, Susanne, 06577 Etzleben (DE); LINSS, Gerhard, 98529 Suhl (DE); ROSENBERGER, Maik, 98744 Cursdorf (DE)
(74) Vertreter: Engel, Christoph Klaus
(86) Internationale Anmeldenummer: PCT/EP2008/050078
(87) Internationale Veröffentlichungsnummer: WO 2008/087059

(56) Entgegenhaltungen:
- WO-A-02/084215
- US-A- 4 577 095
- TOPFER SUSANNE ET AL: "Quality measures for depth-from-focus approaches" PROC SPIE INT SOC OPT ENG; PROCEEDINGS OF SPIE - THE INTERNATIONAL SOCIETY FOR OPTICAL ENGINEERING; PHOTONICS, DEVICES AND SYSTEMS III 2006, Bd. 6180, 8. Juni 2005 (2005-06-08), XP002478965 in der Anmeldung erwähnt

## Beschreibung

Die Erfindung betrifft ein Verfahren zur objektivierten Fokussierung für die optische Längenmesstechnik mit einem kombinierten Fokuskriterium für passive Fokusverfahren. Anwendung findet dieses neuartige Verfahren z.B. in der optischen Koordinatenmesstechnik, bei der 3D Bildverarbeitung mit einer Bestimmung der geometrischen Merkmale des Messobjektes oder einer Kantendetektion und speziell in der optischen Präzisionsmesstechnik.

Unter einem Koordinatenmessgerät wird im Sinne der vorliegenden Erfindung ein Gerät mit mehreren Antrieben, deren jeweilige Position mit Hilfe von Maßstäben bestimmt werden kann, verstanden, wobei die Messsensorik relativ zum Werkstück in den drei Koordinaten x, y und z bewegt werden kann. Die Messsensorik kann dabei aus einem Sensor oder aus mehreren unterschiedlichen Sensoren (Multisensorik) bestehen. Das vorliegende Verfahren kann an allen Koordinatenmessgeräten angewendet werden, bei denen mindestens ein Bildsensor als Teil der Messsensorik vorhanden ist.

Aus der WO 02/084215 A1 ist ein Verfahren zur Optimierung der Zielgrößen wahrend einer optischen Präzisionsmessung bekannt. Dabei werden aus Bildinformationen eines zu vermessenden Werkstücks zunachst Hilfsparameter gewonnen, aus denen nachfolgend Steuerinformationen für die Einflussgrößen dieser Zielgrößen abgeleitet werden. Die Hilfsparameter werden derart bestimmt, dass sie ein gleichartiges Extrem der funktionalen Abhängigkeit der Einflussgrößen besitzen.

In der DE 196 54 067 A1 ist ein Verfahren zur Vermessung von Kanten an Werkstücken beschrieben. Dazu wird ein Abtastpunkt über eine zu vermessende Kante derart verfahren, dass die Kante in einer Vielzahl nebeneinander liegender Punkte geschnitten wird. Aus den gemessenen Abstandswerten werden durch Interpolation die Schnittpunkte aus abgefahrener Bahn und vermessener Kante bestimmt.

Jedes Messobjekt besitzt sein charakteristisches Ortsfrequenzspektrum. Das optische Abbildungssystem wirkt wie ein Bandpass. Folglich werden besonders hohe und besonders tiefe Ortsfrequenzen eliminiert. Bei der Auswertung mit einem einzelnen Fokuskriterium wird eine bestimmte Ortsfrequenz bzw. ein bestimmter Ortsfrequenzbereich in Form der Fokussuche ausgewertet. Besitzt das Messobjekt in dem ausgewerteten Bereich keine signifikanten Signalanteile bzw. ist diese Ortsfrequenz nicht vorhanden, dann schlägt die Fokussuche fehl: entweder es wird gar kein Ergebnis ermittelt oder es wird eine Fokusposition ermittelt, die offensichtlich keine scharfe Abbildung des Messobjektes erlaubt.

Ein Fokuskriterium ist eine mathematische Berechnungsvorschrift, die aus den Intensitätswerten im Bild einen Wert für die Schärfe des Bildes, einen sogenannten Fokuswert, berechnet.

Prinzipiell sind die Fokusverfahren zur Abstandsmessung in die zwei Gruppen Fokussucheverfahren (depth-from-focus) und Defokusverfahren (depth-from-defocus) zu unterteilen. Fokussucheverfahren haben das Ziel, die Objekt- bzw. Bildweite so einzustellen, dass das Bild des Objektes scharf auf dem Bildsensor abgebildet wird. Aus der Kenntnis der Abbildungsgleichung lässt sich somit der Abstand zum Messobjekt bestimmen. Defokusverfahren bestimmen den Radius des Unschärfescheibchens im unscharfen Bild als Maß für die Defokussierung. Daraus kann bei bekannten Daten von Kamera und Abbildungssystem der Abstand zum Messobjekt bestimmt werden.

Beide Gruppen der Fokusverfahren können jeweils in aktive und passive Verfahren unterteilt werden. Passive Verfahren arbeiten mit Umgebungslicht oder unter näherungsweise konstanten Beleuchtungsbedingungen. Sie erfordern somit für ihre Funktion keine eigene Lichtquelle. Die Beleuchtung erfüllt lediglich die Hilfsfunktion, das Messobjekt zu beleuchten und dadurch die Bildaufnahme zu ermöglichen. Bei aktiven Verfahren hingegen ist eine eigene Lichtquelle erforderlich, wie dies beispielsweise in Rönneberg, G.: Ein passives Fokusverfahren zur Vermessung von Mikrostrukturen; Fortschritt-Berichte VDI Reihe 8, Nr. 741 (1999) beschrieben ist. Typischerweise ändert sich die vom Detektor registrierte Lichtintensität während der Fokussierung signifikant (z.B. konfokales Mikroskop, Autofokussensor) oder die örtliche Intensitätsverteilung auf dem Messobjekt (z.B. strukturierte Beleuchtung) ist für die Fokussierung maßgeblich.

In der optischen Präzisionsmesstechnik werden typischerweise Fokussucheverfahren eingesetzt. Aktive Fokussucheverfahren werden in Form von Autofokussensoren angewendet, beispielsweise beschrieben in Qingxiang, L.; Lifen, B. ; Shifu, X. ; Luyun, C.: Autofocus system for microscope; Optical Engineering (2002), Vol. 41, Nr. 6, S. 1289-1294. Am häufigsten ist jedoch der Einsatz passiver Fokussucheverfahren.

Typischerweise wird die Messobjektebene, die parallel zum Bildsensor liegt, mit den Koordinaten x und y beschrieben und die optische Achse des zugehörigen Abbildungssystems mit der z-Koordinate. Bei den meisten optischen Koordinatenmessgeräten (KMG) wird die Objektweite bzw. die z-Koordinate bei der Fokussuche variiert.

In der industriellen Praxis wird standardmäßig das Fokuskriterium verwendet, welches in 80 Prozent aller Fälle eine erfolgreiche Fokussuche gewährleistet. Bei den restlichen 20 Prozent bleibt es dem Maschinenbediener überlassen, ein geeignetes Kriterium einzustellen. Folglich ist das Messergebnis abhängig von den Fähigkeiten des Maschinenbedieners und subjektiv beeinflusst.

In der Fachliteratur wird die Idee, zwei Kriterien miteinander zu kombinieren, oft formuliert. In Widl, A.: Abbildende Optik auf Basis flexibel verformbarer Linsen; Technische Universität München, Dissertation, 1998 beschreibt der Autor z.B. ein Zoomsystem auf Basis flexibel verformbarer Linsen. Die Messung der Bildschärfe erfolgt durch Aufnahme mit einer CCD Kamera und Anwendung eines einzelnen Fokuskriteriums auf das aufgenommene Bild. Entsprechend dem Fokuswert wird anschließend die Brennweite des Objektivs variiert. Als Fokuskriterium wurde die Varianz (VAR) verwendet. Auf der Seite 84, im Kapitel 7 "Technischer Ausblick" ist formuliert, dass die Fokussierung "[...] durch Korrelation mehrerer Fokusfunktionen (z.B. VAR und TSPC (Thresholded Video-Signal Pixel Count)) in unterschiedlichen Bildbereichen verbessert werden [...]" kann. Es werden jedoch keine weiteren Ausführungen dazu gemacht.

In Groen, F.C.A.; Young, I.T.; Ligthart, G.: A comparison of different focus functions for use in autofocus algorithm; Cytometry (1985), Nr. 6, S. 81-91 beschreiben die Autoren die Untersuchung und den Vergleich von verschiedenen Fokuskriterien für den Autofokus von Mikroskopen und anderen optischen Instrumenten anhand von drei typischen Messobjekten. Als Ergebnis der Untersuchung wird als optimales Fokuskriterium eine Kombination aus einem breitbauchigem Kriterium (z.B. Normierte Varianz) und einem spitzgipfligen Kriterium (z.B. quadratischer Gradient) empfohlen. In diesem Fall besteht das kombinierte Fokuskriterium aus zwei verschiedenen Fokuskriterien, die jeweils eine besondere Anforderung an den Funktionsverlauf (spitzgipflig und breitbauchig) erfüllen müssen. Das breitbauchige Kriterium soll einen breiten Fokusbereich und das spitzgipflige eine hohe Wiederholpräzision gewährleisten.

In Nehse, U.: Beleuchtungs- und Fokusregelungen für die objektivierte optische Präzisionsantastung in der Koordinatenmesstechnik; Technische Universität Ilmenau, Dissertation, 2001 nennt der Autor auf Seite 23 verschiedene Fokuskriterien, die in der optischen Koordinatenmesstechnik zum Einsatz kommen. Im Kapitel 8.2 wird ein kombiniertes Fokuskriterium als gewichtete Summe von einzelnen Fokuskriterien vorgeschlagen. Dabei wird jedoch nur eine begrenzte Anzahl von Fokuskriterien für die Kombination vorgeschlagen. Konkret werden drei Fokuskriterien für das kombinierte Kriterium vorgeschlagen und durch Formeln mathematisch beschrieben - die Grauwertdifferenz, der Kontrast und die mit dem Mittelwert normierte Streuung. Als Motivation für die Wichtung von Fokuskriterien wird die Steigerung der Robustheit der Fokussierung genannt. Es werden jedoch keine experimentellen Daten zu dem kombinierten Fokuskriterium angeführt.

Daneben wird in der DE 42 26 523 B4 ein Verfahren zur Fokussierung basierend auf dem sogenannten "dual-out-of-focus" Prinzip beschrieben. Dabei wird angeführt, dass die aufgenommenen Bilder mit einem oder mehreren Fokuskriterien ausgewertet werden können. "[...] Es werden somit für jedes der drei Teilbilder (36, 37, 38) ein oder mehrere Fokuskriterien erhalten. Dabei kann vorgesehen werden, dass im Falle einer ungenügenden Aussage eines derartigen Fokuskriteriums eine Rückmeldung an das Bildverarbeitungssystem (12) erfolgt, mit der eine Anforderung nach einer neuen Strategie für die Einheit (15) der Signalaufbereitung und für die Einheit (16) zur Berechnung des oder der Fokuskriterien angefordert wird.[...]" Folglich beinhaltet dieses Patent im Gegensatz zum kombinierten Fokuskriterium, dass die Kriterien nicht parallel angewendet und entsprechend ausgewertet werden, sondern, dass hier eine Regelung vorliegt und eine neue Auswertung der Bilder, wenn ein Fokuskriterium sich als ungenügend erweist, erfolgt.

Aufgabe der vorliegenden Erfindung ist es deshalb, die Nachteile der aus dem Stand der Technik bekannten Verfahren zu überwinden und ein Verfahren zur Ermittlung eines optimierten Fokuskriteriums bereitzustellen, mit dem Ziel, die passive Fokussierung in der optischen Längenmesstechnik bedienerunabhängig zu realisieren. Außerdem soll ein Präzisionsmessgerät bereitgestellt werden, mit welchem ein derartiges Verfahren ausführbar ist.

Erfindungsgemäß gelingt die Lösung dieser Aufgabe mit den Merkmalen des Patentanspruchs 1 bzw. des nebengeordneten Patentanspruchs 8.

Bevorzugte Ausgestaltungen des erfindungsgemäßen Verfahrens sind in den Unteransprüchen angegeben.

Die Erfindung wird im Folgenden anhand von Zeichnungen näher erläutert. Es zeigen:
- Fig. 1: einen Ablaufplan eines an sich bekannten passiven Fokusverfahrens, wie es in Töpfer, S.; Nehse, U.; Linß, G.: Quality measures for depth-from-focus approaches; Proceedings of SPIE, vol. 6180, pp. 55-60, 2006 näher beschrieben ist;

- Fig. 2: eine Funktionsprinzipskizze des erfindungsgemäßen Verfahrens;
- Fig. 3 + 4: Formeln zur Berechnung von Fokuskriterien.

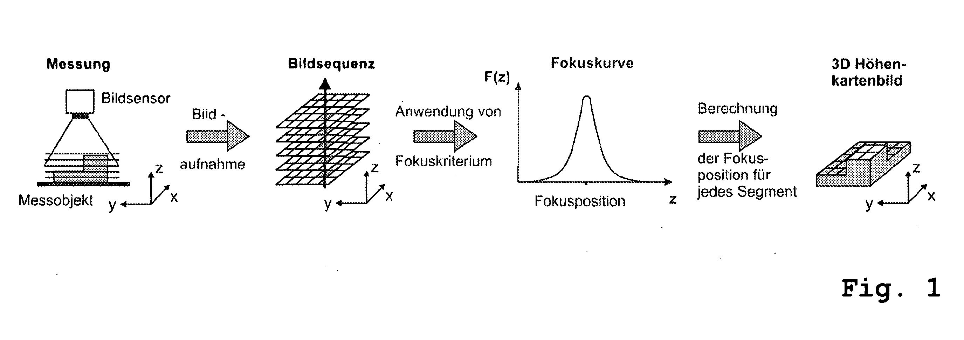

In Fig. 1 ist u.a. eine Fokusfunktion bzw. Fokuskurve (Bildschärfe als Funktion der z-Koordinate) dargestellt, die durch die Anwendung eines Fokuskriteriums auf eine Bildsequenz (digitalisierte Bildfolge) entsteht.

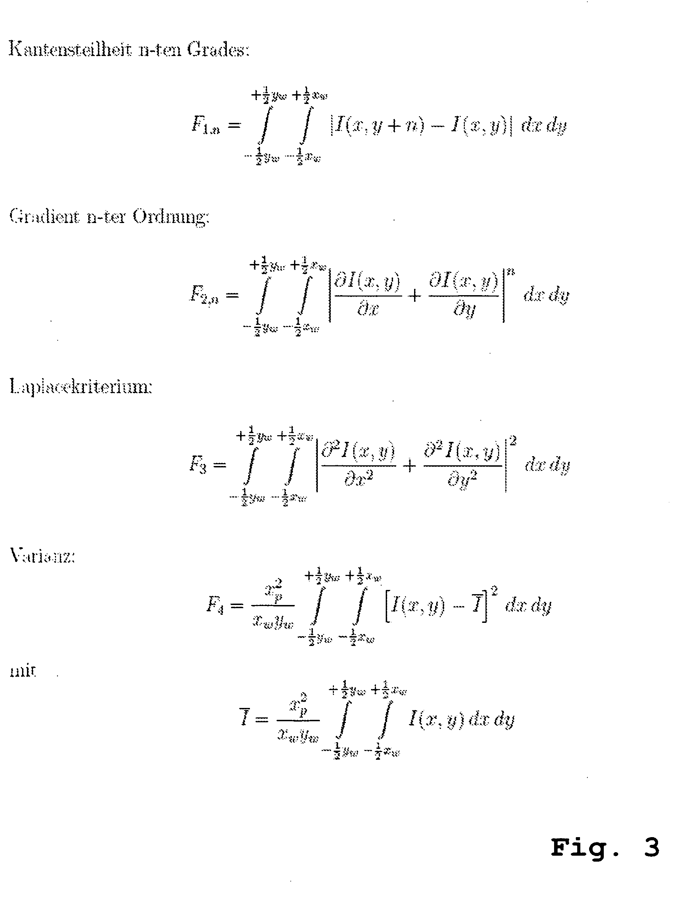

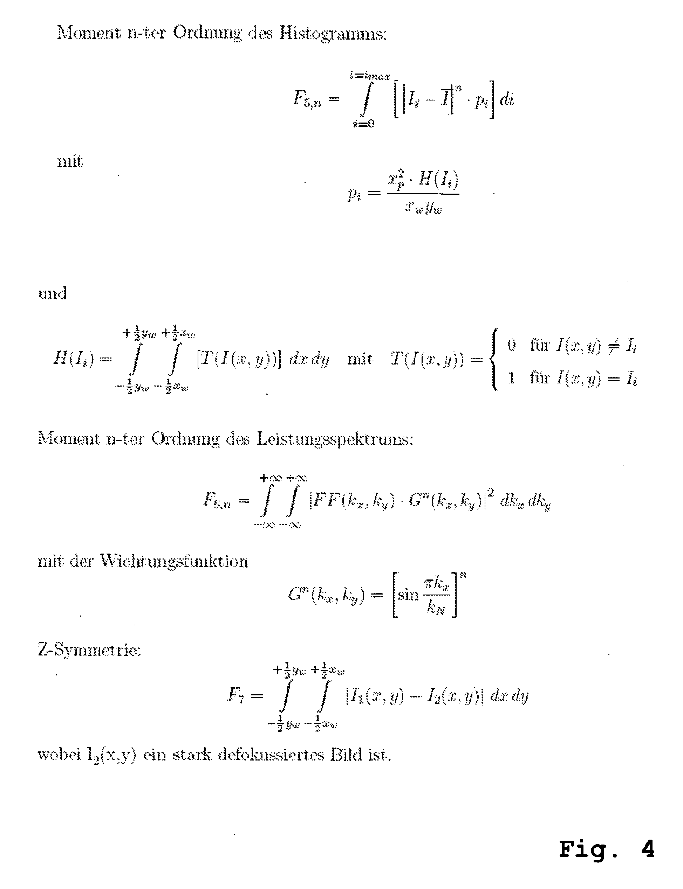

Statt nur einem oder zwei oder drei Fokuskriterien enthält das kombinierte, erfindungsgemäße Fokuskriterium eine Vielzahl (≥ 5) von einzelnen Fokuskriterien, wie z.B. die Kantensteilheit n-ten Grades, der Gradient n-ter Ordnung, das Laplacekriterium, die Varianz, die Z-Symmetrie oder das Moment n-ter Ordnung des Histogramms oder des Leistungsspektrums (s. Fig. 3 und 4). Das stellt gegenüber dem Stand der Technik eine neue Qualität dar. An die einzelnen Fokuskriterien für das kombinierte Fokuskriterium werden keine speziellen Anforderungen (z.B Spitzgipfligkeit) gestellt. Lediglich das Funktionsprinzip der einzelnen Fokuskriterien muss unterschiedlich sein. Folglich wertet jedes einzelne Fokuskriterium einen anderen Ortsfrequenzbereich aus, wobei sich die Ortsfrequenzbereiche verschiedener Fokuskriterien aber durchaus teilweise überdecken können.

Jedes einzelne der Kriterien wird auf die aufgenommene Bildfolge (Fig. 1) angewendet und es wird jeweils eine Fokuskurve (Bildschärfe als Funktion der z-Koordinate) erzeugt. Alle Fokuskurven werden jeweils bezüglich ihrer Qualität (Güte) nach der in "Quality measures for depth-from-focus approaches" (Fig. 1) beschriebenen Methode bewertet. Die Güte der Fokuskurven kann anhand aller oder anhand einer Untermenge der folgenden sechs Kriterien bewertet werden:
- Unimodalität: Die Anzahl der Maxima der Fokuskurve darf nicht größer als 1 sein.
- Robustheit: Bewertung des Rauschens der Fokuskurve
- Genauigkeit: Das Extremum der Fokuskurve tritt auf, wenn das System fokussiert ist.
- Wiederholbarkeit: Bewertung der Wiederholpräzision anhand der Spitze der Fokuskurve,
- Definitionsbereich: Bewertung der Breite der Fokusfunktion im unteren Wertebereich,
- Allgemeine Anwendbarkeit: Die Anwendbarkeit des Fokuskriteriums sollte nicht auf eine bestimmt Anzahl von Bildsezenen begrenzt sein.

In der Praxis wird die Güte von Fokuskurven häufig anhand der vier Kriterien Unimodalität, Definitionsbereich, Wiederholbarkeit und Robustheit bestimmt. Der Wertebereich der Güte einer Fokuskurve (Fokusgüte) läuft von 0 für eine exzellente Güte bis einschließlich 100, welches für eine extrem schlechte Güte steht.

Von allen einzelnen Fokuskriterien werden nur die Fokuskriterien mit ausreichender Güte (Q ≤ Q_{G}, wobei häufig Q_{G}=30) anschließend fur die Berechnung der Fokusposition als gewichteter Mittelwert der Fokuspositionen der einzelnen Fokuskurven verwendet. Die Bewertung der Qualität der einzelnen Fokuskurven sowie die Nutzung dieser Kennzahl einerseits für die Wichtung und andererseits für die Eliminierung von ungenügenden Fokuskurven stellt ebenfalls eine neue Qualität gegenüber dem Stand der Technik dar. Es handelt sich bei diesem Verfahren aus regelungstechnischer Sicht um keine Regelung, sondern um eine Steuerung. Die Bildsequenz wird nur einmal aufgenommen.

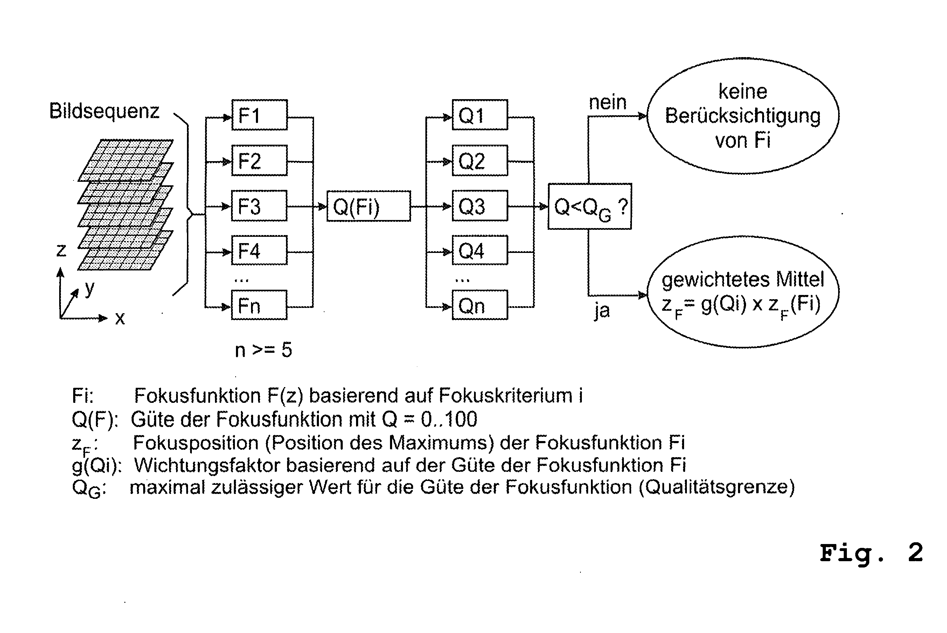

In Fig. 2 ist der Ablauf des erfindungsgemäßen Verfahrens schematisch dargestellt. In herkömmlicher Weise wird zunächst eine Bildsequenz aufgenommen. Für jedes einzelne Fokuskriterium wird eine Fokusfunktion (Bildschärfe als Funktion der z-Koordinate) für die aufgenommene Bildsequenz erzeugt. Die erhaltenen Fokusfunktionen (Fₙ) werden anschließend bezüglich ihrer Qualität (Q) bewertet. Für jede Fokuskurve/Fokusfunktion, die eine Qualität gleich oder besser bzw. kleiner als der maximal zulässige Wert der Qualität der Fokuskurve Q_{G} (beispielsweise 30) aufweist (d.h. Qualitätskennzahl Q ≤ Grenzqualität Q_{G}), wird der z-Wert für das Maximum der Fokusfunktion bestimmt. Dieses Maximum ist der Fokuswert für die jeweilige Fokusfunktion. Für alle Fokusfunktionen mit einer ausreichenden Fokusgüte wird der gewichtete Mittelwert aus den zugehörigen Fokuspositionen berechnet. Der Wichtungsfaktor wird dabei aus der jeweiligen Qualitätskennzahl der Fokusfunktion abgeleitet, beispielsweise durch Verwendung des reziproken Wertes. Die berechnete Fokusposition des kombinierten Fokuskriteriums wird anschließend als Stellgröße an das Bewegungssystem des optischen Messgeräts gesendet.

Mit dem vorgeschlagenen erfindungsgemäßen Verfahren wird eine objektivierte Messung ermöglicht, bei der man für ein und dasselbe Messobjekt stets dasselbe Messergebnis erhält. Die Einstellung von Fokuskriterien durch einen Bediener ist nicht mehr erforderlich und die Messung kann unabhängig vom Ortsfrequenzspektrum des Messobjektes erfolgen.

## Patentansprüche

1. Verfahren zur objektivierten Fokussierung für passive Fokusverfahren in der optischen Längenmesstechnik, **dadurch gekennzeichnet, dass** ein kombiniertes Fokuskriterium verwendet wird, welches aus einer Kombination einer Vielzahl ≥ 5 einzelner Fokuskriterien gebildet wird
wobei die Funktionsprinzipien der einzelnen Fokuskriterien unterschiedlich sind, sodass jedes einzelne Fokuskriterium einen anderen Ortsfrequenszbereich auswertet, wobei sich die Ortsfrequenzbereiche verschiedener Fokuskriterien teilweise überdecken können, wobei das Verfahren folgende Schritte umfasst:
- Aufnahme einer Bildsequenz;
- für jedes einzelne Fokuskriterium wird eine Fokusfunktion, d.h. die Bildschhärfe als Funktion der z-Koordinate, für die aufgenommene Bildsequenz erzeugt, wobei die Güte der einzelnen Fokusfunktionen anhand eines einzelnen oder einer Kombination aus Einzelkriterien, wie z.B. Unimodalität, Genauigkeit, Definitionsbereich, Wiederholbarkeit, Robustheit und Allgemeine Anwendbarkeit, bestimmt wird;
- die erhaltenen Fokusfunktionen werden bezüglich ihrer Qualität (Q) bewertet;
- für jede Fokusfunktion mit einer Qualitätskennzahl Q ≤ einer Grenzqualität Q_{c} wird das jeweilige Maximum ermittelt, wobei sich die Güte mit steigendem Wert der Qualitätskennzahl verschlechtert;
- aus den ermittelten Fokusmaxima der einzelnen Fokusfunktionen wird ein gewichteter Mittelwert als einzustellende Fokusposition generiert, wobei der Betrag des Wichtungsfaktors aus der jeweiligen Qualitätskennzahl der Fokusfunktion abgeleitet wird.

2. Verfahren nach Anspruch 1, **dadurch gekennzeichnet, dass** die Wichtung der verschiedenen Fokuspositionen mit einer Qualität gleich oder besser der Grenzqualität Q_{G} als Reziprokwert des Betrages der jeweiligen Qualität bestimmt wird.

3. Verfahren nach Anspruch 1 oder 2, **dadurch gekenntzeichnet, dass** die Wichtung der verschiedenen Fokuspositionen mit einer Qualität gleich oder besser der Grenzqualität Q_{G} als Reziprokwert der Rangnummer des Betrages der jeweiligen Qualität bestimmt wird, wenn die verbliebenen Fokusfunktionen nach dem steigenden Betrag ihrer jeweiligen Qualität geordnet werden.

4. Verfahren nach einem der Ansprüche 1 bis 3, **dadurch gekennzeichnet, dass** die Berechnung der Fokusfunktionen aus der aufgenommenen Bildsequenz entweder parallel oder sequentiell erfolgt.

5. Verfahren nach einem der Ansprüche 1 bis 4, **dadurch gekennzeichnet, dass** bei der Aufnahme der Bildsequenz entweder die Bild- oder die Objektweite variiert wird.

6. Verfahren nach einem der Ansprüche 1 bis 5, **dadurch gekennzeichnen, das** die Bildsequenz mit einer Grauwertkamera aufgenommen wird.

7. Verfahren nach einem der Ansprüche 1 bis 5, **dadurch gekennzeichnet, das** die Bildsequenz mit einer Farbkamera aufgenommen wird.

8. Präzisionsmessgerät, insbesondere Koordinatenmessgerät zur maßlichen Erfassung von Werkstücken mithilfe eines Bildsensors, **dadurch gekennzeichnet, dass** Mittel vorhanden sind, die das Verfahren gemäß einem der Ansprüche 1 bis 7 ausführen.

9. Präzisionsmessgerät nach Anspruch 8, **dadurch gekennzeichnet, dass** mehrere Sensoren (Multisensorik) vorhanden sind, wovon mindestens einer der Bildsensor ist.

10. Präzisionsmessgerät nach Anspruch 8 oder 9, **dadurch gekennzeichnet, dass** mindestens eine Bewegungsachse vorgesehen ist, entlang derer eine Relativbewegung zwischen dem Werkstück, und dem Bildsensor ausgeführt werden kann.

## Claims

1. Method for the objective focusing for passive focusing in the optical length measurement, **characterized in that** a combined focus criterion is used, which is created from a combination of a plurality of ≥ 5 singular focus criteria, whereas the functional principles of each of the singular focus criteria are different, so that each single focus criterion analyzes a different spatial frequency range, whereas the spatial frequency ranges of different focus criteria may partially cover each other, whereas the method comprises the following steps:
- recording of an image sequence;
- for each focus criterion a focus function - that is the image sharpness as function of the z-coordinate - is created for the recorded image sequence, whereas the quality of each singular focus function is determined by means of one singular or a combination of singular criteria, for example unimodality, accuracy, definition range, reproducibility, robustness and general applicability;
- the determined focus functions are analyzed with regard to their quality (Q);
- for each focus function with a quality value Q ≤ of a quality threshold Q_{G} the respective maximum is determined, whereas the quality degrades when the quality score is increasing;
- from the determined focus maxima of the singular focus functions a weighted average value is generated as adjustable focus position, whereas the amount of the weighting factor is derived from the respective quality value of the focus function.

2. Method according to claim 1, **characterized in that** the weighting of the various focus positions with equal or better quality than the quality threshold Q_{G} is determined as reciprocal of the magnitude of the respective quality.

3. Method according to claim 1 or 2, **characterized in that** the weighting of the various focus positions with equal or better quality than the quality threshold Q_{G} is determined as reciprocal of the rank number of the magnitude of the respective quality, when the remaining focus functions are arranged according to the increasing magnitude of their respective quality.

4. Method according to one of the claims 1 to 3, **characterized in that** the calculation of the focus functions from the recorded image sequence is made either parallel or sequentially.

5. Method according to one of the claims 1 to 4, **characterized in that** either the image distance or the object distance is being varied while recording the image sequence.

6. Method according to one of the claims 1 to 5, **characterized in that** the image sequence is recorded with a gray scale value camera.

7. Method according to one of the claims 1 to 5, **characterized in that** the image sequence is recorded with a color camera.

8. Precision optical measurement device, particularly coordinate measuring machine for the dimensional recording of workpieces by means of an image sensor, **characterized in that** means are available for conducting the method according to one of the claims 1 to 7.

9. Precision optical measurement device according to claim 8, **characterized in that** multiple sensors (multi-sensor technology) are available, whereof at least one is the image sensor.

10. Precision optical measurement device according to claim 8 or 9, **characterized in that** at least one movement axis is provided along which a relative movement between the workpiece and the image sensor can be conducted.

## Revendications

1. Procédé de focalisation objectivée pour procédés de mise au point passive dans la technique de la mesure optique des longueurs, **caractérisé en ce qu'**un critère de mise au point combiné est utilisé qui est formé à partir d'une combinaison d'une pluralité ≥5 de critères de mise au point individuels, dans lequel les principes de fonctionnement des critères de mise au point individuels sont différents, de sorte que chaque critère de mise au point individuel évalue une plage de fréquence de lieu différente, les plages de fréquence de lieu de différents critères de mise au point pouvant se chevaucher en partie, ledit procédé comprenant les étapes suivantes consistant à :
- enregistrer une séquence d'images ;
- générer pour chaque critère de mise au point individuel une fonction de mise au point, c'est-à-dire la netteté de l'image en fonction de la coordonnée z, pour la séquence d'images enregistrée, le facteur de qualité des fonctions de mise au point individuelles étant déterminé à l'aide d'un seul critère ou d'une combinaison de critères individuels, comme par exemple l'unimodalité, l'exactitude, le domaine, la reproductibilité, la robustesse et l'applicabilité générale ;
- évaluer les fonctions de mise au point obtenues quant à leur qualité (Q) ;
- déterminer le maximum respectif pour chaque fonction de mise au point ayant un indice de qualité Q ≤ à une qualité limite Q_{G}, le facteur de qualité se dégradant avec une valeur croissante de l'indice de qualité ;
- générer à partir des maxima de mise au point déterminés des fonctions de mise au point individuelles une moyenne pondérée en tant que position de mise au point à régler, la grandeur du facteur de pondération étant dérivée de l'indice de qualité respectif de la fonction de mise au point.

2. Procédé selon la revendication 1, **caractérisé en ce que** la pondération des différentes positions de mise au point est déterminée avec une qualité égale ou supérieure à la qualité limite Q_{G} en tant que valeur réciproque de la grandeur de la qualité respective.

3. Procédé selon la revendication 1 ou 2, **caractérisé en ce que** la pondération des différentes positions de mise au point d'une qualité égale ou supérieure à la qualité limite Q_{G} est déterminée comme la valeur réciproque du numéro d'ordre de la grandeur de la qualité respective lorsque les fonctions de mise au point restantes sont classées selon la grandeur croissante de leur qualité respective.

4. Procédé selon l'une quelconque des revendications 1 à 3, **caractérisé en ce que** le calcul des fonctions de mise au point à partir de la séquence d'images enregistrée s'effectue soit en parallèle soit en séquence.

5. Procédé selon l'une quelconque des revendications 1 à 4, **caractérisé en ce que** lors de l'enregistrement de la séquence d'images, on fait varier soit la largeur de l'image, soit la largeur de l'objet.

6. Procédé selon l'une quelconque des revendications 1 à 5, **caractérisé en ce que** la séquence d'images est enregistrée par une caméra à niveaux de gris.

7. Procédé selon l'une quelconque des revendications 1 à 5, **caractérisé en ce que** la séquence d'images est enregistrée par une caméra couleur.

8. Appareil de mesure de précision, en particulier appareil de mesure de coordonnées pour la détection dimensionnelle de pièces à travailler à l'aide d'un capteur d'image, **caractérisé par** la présence de moyens exécutant le procédé selon l'une quelconque des revendications 1 à 7.

9. Appareil de mesure de précision selon la revendication 8, **caractérisé par** la présence de plusieurs capteurs (technique multisensorielle) dont au moins l'un est le capteur d'image.

10. Appareil de mesure de précision selon la revendication 8 ou 9, **caractérisé en ce qu'**au moins un axe de mouvement est prévu suivant lequel un mouvement relatif peut être effectué entre la pièce à travailler et le capteur d'image.
